# EUROPÄISCHE PATENTSCHRIFT

(11) **EP 1 434 678 B1**
(45) Veröffentlichungstag und Bekanntmachung des Hinweises auf die Patenterteilung: **15.02.2006**
(21) Anmeldenummer: 02787479.1
(22) Anmeldetag: 02.10.2002
(51) Int. Cl.: B29C 43/00, B29C 43/56

(54) **VERFAHREN ZUR HERSTELLUNG VON HALBZEUGEN AUS HOCH-ODER ULTRAHOCHMOLEKULAREN POLYMEREN, DERART HERGESTELLTE HALBZEUGE SOWIE DEREN VERWENDUNG**
METHOD FOR PRODUCING POLYMER SEMI-PRODUCTS WITH HIGH AND ULTRA-HIGH MOLECULAR WEIGHT, RESULTING SEMI-PRODUCTS AND USES THEREOF
PROCEDE DE PRODUCTION DE DEMI-PRODUITS EN POLYMERES A HAUT ET ULTRA HAUT POIDS MOLECULAIRE, DEMI-PRODUITS AINSI OBTENUS ET LEUR UTILISATION

(30) Priorität: 10.10.2001 DE 10149884
(43) Veröffentlichungstag der Anmeldung: 07.07.2004
(73) Patentinhaber: Rosing, Hubert, 48691 Vreden (DE); Föcking, Franz-Josef, 46354 Südlohn (DE); Wöhrmann, Werner, 48691 Vreden (DE)
(72) Erfinder: Rosing, Hubert, 48691 Vreden (DE); Föcking, Franz-Josef, 46354 Südlohn (DE); Wöhrmann, Werner, 48691 Vreden (DE)
(74) Vertreter: Pfenning, Meinig & Partner GbR
(86) Internationale Anmeldenummer: PCT/EP2002/011074
(87) Internationale Veröffentlichungsnummer: WO 2003/033229

(56) Entgegenhaltungen:
- GB-A- 1 470 850
- US-A- 4 110 391
- US-A- 4 351 869
- US-A- 5 292 584
- US-A- 5 830 396
- US-A- 6 132 657

## Beschreibung

Die Erfindung betrifft ein Verfahren zur Herstellung von Halbzeugen, ebenso wie von Form- und Fertigteilen aus hoch- und ultrahochmolekularen Polymeren, insbesondere Polyethylen mit einer mittleren Molmasse von mehr als 500000 g/mol sowie derart hergestellte Halbzeuge. Aufgrund der erhöhten Dichte und des verringerten Radikalgehaltes ergeben sich Verbesserungen für Halbzeuge und Formteile in der Alterungsbeständigkeit und in der Verschleißfestigkeit.

Aus dem Stand der Technik ist die Erzeugung von Halbzeugen aus hoch- und ultrahochmolekularen Polymeren durch die Verpressung und Sinterung von pulverförmigem polymerem Ausgangsmaterial bekannt. Wegen des hohen Molekulargewichtes der Polymere kommt es zu einem Sinterprozeß, der die anschließende Formgebung ermöglicht. Aufgrund der atmosphärischen Bedingungen kann bei diesem Prozess eine thermische Schädigung des Polymers eintreten, durch die die Alterungsbeständigkeit und die Verschleißfestigkeit reduziert werden. Eine Möglichkeit, diese Problematik zu umgehen, ist die Herstellung derartiger Halbzeuge in einer sauerstofffreien Atmosphäre auch unter Reinraumbedingungen.

Die US 5,830,306 betrifft ein Verfahren zur Herstellung von thermoplastischen Kunststoffen, bei dem ein Polymerpulver in einem ersten Container eingeschlossen wird, der dann anschließend evakuiert wird. Anschließend erfolgt eine kalte, isostatische Verpressung. Das derart bearbeitete Polymer wird dann in einen zweiten Container gegeben, wo dann eine heiße isostatische Verpressung durchgeführt wird.

Die US 6,132,657 beschreibt ein Verfahren zur Herstellung von verfestigten Polymeren durch Verpressung.

Ausgehend von diesen Nachteilen des Standes der Technik ist es daher Aufgabe der vorliegenden Erfindung, ein Verfahren zur Herstellung von Halbzeugen aus hoch- und ultrahochmolekularen Polymeren bereitzustellen, bei dem der Kontakt mit Sauerstoff während des Sinterprozesses auf einfache und kostengünstige Weise auch unter Reinraumbedingungen vermieden werden kann. Unter den Begriff Halbzeuge sollen im Rahmen dieser Anmeldung auch Form- oder Fertigteile verstanden gefasst werden.

Diese Aufgabe wird durch das Verfahren mit den Merkmalen des Anspruchs 1 sowie durch das derart hergestellte Halbzeug mit den Merkmalen des Anspruchs 11 gelöst. Die weiteren abhängigen Ansprüche zeigen vorteilhafte Weiterbildungen der Erfindung auf. Die Verwendung der Halbzeuge wird in den Ansprüchen 13 bis 15 beschrieben.

Erfindungsgemäß wird ein Verfahren zur Herstellung von Halbzeugen aus hoch- und ultrahochmolekularen Polymeren, insbesondere Polyethylen mit einer mittleren Molmasse von mehr als 500000 g/mol, bereitgestellt. Dieses basiert auf einem Sinterprozess, der bei Temperaturen zwischen 150 und 300 °C sowie Drücken zwischen 50 und 400 bar durchgeführt wird.

Dieser aus dem Stand der Technik bekannte Sinterprozeß wird erfindungsgemäß derart abgewandelt, daß das Polymer in einem eine sauerstoffreie Atmosphäre enthaltendem Gebinde eingeschlossen wird. Nach der Verpressung zum Halbzeug, die z.B. durch Plattenverpressung erfolgen kann, wird dann anschließend das Gebinde vom Halbzeug abgetrennt.

Hierdurch wird es nun ermöglicht, daß während des Sinterprozesses ein Kontakt zwischen Polymer und Sauerstoff aus der umgebenden Atmosphäre verhindert wird. Überraschenderweise konnte gezeigt werden, daß derart hergestellte Polymere eine geringere Konzentration an freien Radikalen aufweisen und dadurch eine hohe Alterungsbeständigkeit und Verschleißfestigkeit besitzen.

Bevorzugt besteht das Gebinde aus einer Polymerfolie mit guten Barriereeigenschaften gegen Sauerstoff, so daß der Eintritt von Sauerstoff durch die Polymerfolie während des Verfahrens verhindert wird. Dabei ist es bevorzugt, daß das Gebinde aus einem Polymer mit einer Temperaturstabilität bis 300°C besteht, um die thermische Zersetzung des Gebindes während des Sinterprozesses zu verhindern.

Das Polymer wird zu Beginn, bevorzugt in Pulver- oder Granulatform, in das Gebinde eingefüllt. Anschließend erfolgt der Einschluß des Polymers im Gebinde bevorzugt durch Verkleben und/oder Verschweißen des Gebindes. Hieran schließt sich die Erzeugung einer sauerstoffreinen Atmosphäre im Gebinde an, wofür bevorzugt die Evakuierung des Gebindes und/oder die Spülung mit einem Inertgas, z.B. Stickstoff oder einem Edelgas, durchgeführt wird.

Ebenso ist es aber auch möglich, daß die Erzeugung der sauerstoffreien Atmosphäre vor dem Einschluß des Polymers, d.h. vor dem Verkleben oder Verschweißen, erfolgt.

In der vorteilhaften Ausgestaltung des Verfahrens wird das Gebinde derart in zusätzliches Polymer eingebettet, daß eine Beschädigung des Gebindes während des Preßvorgangs verhindert wird. Aufgrund der Temperatur- und Druckbedingungen des Sinterprozesses ist eine Beschädigung des Gebindes nicht auszuschließen. Durch die Einbettung des Gebindes in weiteres polymeres Material, wodurch eine Vergleichmäßigung der Druckverhältnisse an der Gebindeoberfläche erreicht wird, kann eine derartige Beschädigung auf einfachere Weise vermieden werden.

Bevorzugt wird als Polymer ultrahochmolekulares Polyethylen (UHMW-PE) mit einer mittleren molaren Masse von mehr als 500000 g/mol verwendet.

Der Sinterprozeß wird dabei in einer vorteilhaften Weiterbildung des Verfahrens bei einer Temperatur zwischen 150 und 250 °C und einem Druck zwischen 80 und 150 bar durchgeführt.

Erfindungsgemäß wird ebenso ein Halbzeug aus ultrahochmolekularem Polymer das nach dem erfindungsgemäßen Verfahren herstellbar ist, bereitgestellt. Dieses Halbzeug weist eine Dichte zwischen 0,940 und 0,970 cm³/g auf. Bevorzugt liegt die Dichte des Halbzeugs zwischen 0,945 und 0,960 cm³/g. Überraschenderweise weisen diese Halbzeuge bei dieser gegenüber dem Stand der Technik höheren Dichte keinerlei thermisch bedingte polymere Defektstrukturen auf.

Erfindungsgemäß weisen die Halbzeuge eine sehr geringe Konzentration an freien Radikalen auf, die anhand von Elektronenspinresonanz-Spektren nachgewiesen werden kann. So beträgt die Signalamplitude eines Elektronenspinresonanzspektrums des Halbzeugs im Vergleich zu unbehandeltem Material weniger als 50 %. Dies führt zu einer deutlich verbesserten Licht- und Alterungsbeständigkeit sowie zu einer erhöhten Verschleißfestigkeit, die anhand von Untersuchungen der Abriebfestigkeit belegt sind, auf.

Bevorzugt wird das Polymer rein, d.h. ohne weitere Additive, hergestellt.

Aufgrund der verbesserten Eigenschaften bezüglich der Alterungsbeständigkeit und Abriebfestigkeit eignet sich das erfindungsgemäße Halbzeug zur Herstellung von bioinerten medizinischen Geräten oder Implantaten.

Ebenso ist es möglich, das Material nicht, wie aus dem Stand der Technik bekannt, in Plattenform herzustellen, sondern ebenso die Herstellung von Vorformlingen durchzuführen. Diese wiederum können dann anschließend mit geringem mechanischen Aufwand zu den entsprechenden Geräten oder Implantaten weiter verarbeitet werden.

Die Verwendung der Halbzeuge, Form- oder Fertigteile kann auch für allgemeine technische Zwecke Einsatz finden, wenn eine erhöhte Alterungsbeständigkeit und/oder ein geringerer Verschleiß gefordert wird.

## Patentansprüche

1. Verfahren zur Herstellung von Halbzeugen, Form- und/oder Fertigteilen aus hoch- und ultrahochmolekularen Polymeren durch einen Sinterprozess, wobei
a) das Polymer in ein Gebinde mit sauerstofffreier Atmosphäre eingeschlossen wird,
b) das Gebinde in zusätzliche Polymere eingebettet wird,
c) das im zusätzlichen Polymer eingebettete Gebinde bei 150 bis 300 °C und Druck zwischen 50 und 400 bar verpresst wird und
d) das entstandene Halbzeug und/oder Formteil vom Gebinde getrennt wird.

2. Verfahren nach Anspruch 1,
**dadurch gekennzeichnet, dass** das Gebinde aus einer Polymerfolie mit Barriereeigenschaften gegen Sauerstoff besteht.

3. Verfahren nach Anspruch 2,
**dadurch gekennzeichnet, dass** das Gebinde aus einem Polymer mit einer Temperaturstabilität bis 300 °C besteht.

4. Verfahren nach mindestens einem der vorhergehenden Ansprüche,
**dadurch gekennzeichnet, dass** der Einschluss des Polymers durch Verkleben und/oder Verschweißen des Gebindes erfolgt.

5. Verfahren nach mindestens einem der vorhergehenden Ansprüche,
**dadurch gekennzeichnet, dass** die sauerstofffreie Atmosphäre im Gebinde durch Evakuierung erzeugt wird.

6. Verfahren nach mindestens einem der Ansprüche 1 bis 4,
**dadurch gekennzeichnet, dass** die sauerstofffreie Atmosphäre im Gebinde durch Spülung mit einem Inertgas, z.B. Stickstoff oder ein Edelgas, erzeugt wird.

7. Verfahren nach mindestens einem der vorhergehenden Ansprüche,
**dadurch gekennzeichnet, dass** als Polymer hochmolekulares Polyethylen (HMW-PE) mit einem Molekulargewicht von mehr als 500000 g/mol verwendet wird.

8. Verfahren nach mindestens einem der vorhergehenden Ansprüche,
**dadurch gekennzeichnet, dass** als Polymer ultrahochmolekulares Polyethylen (UHMW-PE) mit einem Molekulargewicht von mehr als 2000000 g/mol verwendet wird.

9. Verfahren nach mindestens einem der vorhergehenden Ansprüche,
**dadurch gekennzeichnet, dass** der Sinterprozess bei einer Temperatur zwischen 150 und 250 °C und einem Druck zwischen 80 und 130 bar durchgeführt wird.

10. Verfahren nach mindestens einem der vorhergehenden Ansprüche,
**dadurch gekennzeichnet, dass** der Sinterprozess ohne Zusatz weiterer Additive erfolgt.

11. Halbzeug aus hoch- oder ultrahochmolekularem Polyethylen, herstellbar gemäß dem Verfahren nach mindestens einem der Ansprüche 7 oder 8,
**dadurch gekennzeichnet, dass** das Halbzeug eine Dichte zwischen 0,940 und 0,970 cm³/g, bevorzugt zwischen 0,945 und 0,960 cm³/g besitzt.

12. Halbzeug nach Anspruch 11,
**dadurch gekennzeichnet, dass** das Halbzeug keine weiteren Additive enthält.

13. Verwendung des Halbzeuges nach Anspruch 11 oder 12 zur Herstellung von Vorformlingen.

14. Verwendung des Halbzeuges nach Anspruch 11 oder 12 zur Herstellung von bioinerten medizinischen Geräten und/oder Implantaten.

15. Verwendung des Halbzeuges nach Anspruch 11 oder 12 für technische Bauteile.

## Claims

1. Method for manufacture of semi-products, shaped and/or finished parts of high- and ultrahigh- molecular polymers by a sintering process, where
a: the polymer is encased in a collector with oxygen-free atmosphere;
b: the collector is embedded into additional polymers;
c: the collector which is embedded in additional polymer is compressed at between 150 and 300°C and a pressure between 50 and 400 bar; and
d: the produced semi-product and/or shape part is separated from the collector.

2. Method according to Claim 1,
**characterised in that** the collector is composed of a polymer foil with barrier properties against oxygen.

3. Method according to Claim 2,
**characterised in that** the collector is composed of a polymer with a temperature stability of up to 300°C.

4. Method according to at least one of the above claims,
**characterised in that** the polymer is encased by gluing and/or welding of the collector.

5. Method according to at least one of the above claims,
**characterised in that** the oxygen-free atmosphere in the collector is produced by evacuation.

6. Method according to at least one of Claims 1 to 4,
**characterised in that** the oxygen-free atmosphere in the collector is produced by flushing with an inert gas, for example nitrogen or a precious gas.

7. Method according to at least one of the above claims,
**characterised in that** as polymer is used high-molecular polyethylene (HMW-PE) with a molecular weight of more than 500,000 g/mol.

8. Method according to at least one of the above claims,
**characterised in that** as polymer is used ultra-high molecular polyethylene (UHMW-PE) with a molecular weight of more than 200,000 g/mol.

9. Method according to at least one of the above claims,
**characterised in that** the sintering process is carried out at a temperature between 150 and 250°C and a pressure between 80 and 130 bar.

10. Method according to at least one of the above claims,
**characterised in that** the sintering process is carried out without addition of further additives.

11. Semi-product of high- or ultrahigh-molecular polyethylene, manufactured according to the method of at least one of Claims 7 or 8,
**characterised in that** the semi-product has a density between 0.940 and 0.970 cm³/g, preferably between 0.945 and 0.960 cm³/g.

12. Semi-product according to Claim 11,
**characterised in that** the semi-product does not contain additional additives.

13. Use of the semi-product according to Claim 11 or 12 in the manufacture of pre-moulds.

14. Use of the semi-product according to Claim 11 or 12 in the manufacture of bio-inert medical appliances and/or implants.

15. Use of the semi-product according to Claim 11 or 12 to technical assembly components.

## Revendications

1. Procédé de fabrication de produits semi-finis, de pièces moulées et/ou de pièces finies en polymères de poids moléculaire haut et ultra-haut par un processus de frittage, dans lequel
a) le polymère est enfermé dans un conteneur avec une atmosphère exempte d'oxygène,
b) le conteneur est enrobé dans des polymères supplémentaires
c) le conteneur enrobé dans le polymère supplémentaire est pressé entre 150 et 300 °C et à une pression entre 50 et 400 bar et
d) le produit semi-fini et/ou la pièce moulée sont séparés du conteneur.

2. Procédé selon la revendication 1,
**caractérisé en ce que** le conteneur se compose d'une feuille de polymère avec des propriétés de barrière contre l'oxygène.

3. Procédé selon la revendication 2,
**caractérisé en ce que** le conteneur se compose d'un polymère avec une stabilité à la température jusqu'à 300 °C.

4. Procédé selon l'une au moins des revendications précédentes,
**caractérisé en ce que** le confinement du polymère s'effectue par collage et/ou par soudage du conteneur.

5. Procédé selon l'une au moins des revendications précédentes,
**caractérisé en ce que** l'atmosphère exempte d'oxygène dans le conteneur est réalisée par évacuation.

6. Procédé selon l'une au moins des revendications 1 à 4,
**caractérisé en ce que** l'atmosphère exempte d'oxygène dans le conteneur est réalisée par balayage avec un gaz inerte, par exemple de l'azote ou un gaz rare.

7. Procédé selon l'une au moins des revendications précédentes,
**caractérisé en ce que** l'on utilise comme polymère du polyéthylène à haut poids moléculaire (HMW-PE) avec un poids moléculaire de plus de 500000 g/mol.

8. Procédé selon l'une au moins des revendications précédentes,
**caractérisé en ce que** l'on utilise comme polymère du polyéthylène à ultra-haut poids moléculaire (UHMW-PE) avec un poids moléculaire de plus de 2000000 g/mol.

9. Procédé selon l'une au moins des revendications précédentes,
**caractérisé en ce que** le processus de frittage est effectué à une température entre 150 et 250 °C et à une pression entre 80 et 130 bar.

10. Procédé selon l'une au moins des revendications précédentes,
**caractérisé en ce que** le processus de frittage s'effectue sans l'addition d'autres additifs.

11. Produit semi-fini en polyéthylène à haut ou à ultra-haut poids moléculaire, pouvant être fabriqué conformément au procédé selon l'une au moins des revendications 7 ou 8,
**caractérisé en ce que** le produit semi-fini possède une densité entre 0,940 et 0,970 cm³/g, de préférence entre 0,945 et 0,960 cm³/g.

12. Produit semi-fini selon la revendication 11,
**caractérisé en ce que** le produit semi-fini ne contient pas d'autres additifs.

13. Utilisation du produit semi-fini selon la revendication 11 ou 12 pour la fabrication de préformes.

14. Utilisation du produit semi-fini selon la revendication 11 ou 12 pour la fabrication d'appareils médicaux biologiquement inertes et/ou d'implants.

15. Utilisation du produit semi-fini selon la revendication 11 ou 12 pour des composants techniques.
